(19) Europäisches Patentamt
European Patent Office
Office européen des brevets

(11) **EP 3 431 251 B1**

(12) **EUROPÄISCHE PATENTSCHRIFT**

(45) Veröffentlichungstag und Bekanntmachung des Hinweises auf die Patenterteilung:
**11.09.2019 Patentblatt 2019/37**

(51) Int Cl.:
***B29C 48/92*** *(2019.01)* ***B29K 21/00*** *(2006.01)*

(21) Anmeldenummer: **17182490.7**

(22) Anmeldetag: **21.07.2017**

(54) **VERFAHREN ZUR ERMITTLUNG DES SCHRUMPFVERHALTENS EINER KAUTSCHUKMISCHUNG**

METHOD FOR DETERMINING THE SHRINKAGE OF A RUBBER COMPOUND

PROCÉDÉ DE DÉTERMINATION DE LA RÉTRACTILITÉ D'UN MÉLANGE CAOUTCHOUC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.01.2019 Patentblatt 2019/04**

(73) Patentinhaber: **Continental Reifen Deutschland GmbH**
**30165 Hannover (DE)**

(72) Erfinder:
• **Rennmann, Tim**
**30177 Hannover (DE)**
• **Kwan, Marson**
**Melbourne, 3178 (AU)**

• **Völker, Thomas**
**30926 Seelze (DE)**
• **Schroeder, Carola**
**30173 Hannover (DE)**
• **Borchardt, Endres**
**30827 Garbsen (DE)**
• **Ruckert, Tobias**
**30629 Hannover (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
**EP-A1- 2 532 505     JP-A- 2015 020 389**
**US-A- 4 097 566**

EP 3 431 251 B1

**Beschreibung**

Die Erfindung betrifft ein Verfahren zur Ermittlung des Schrumpfverhaltens einer Kautschukmischung.

In der Kautschukindustrie wird bei der Herstellung von Reifen oder technischen Gummiartikeln eine Vielzahl von Kautschukmischungen mit Hilfe von Extrudern verarbeitet. In den meisten Fällen wird bei dem Prozessschritt des Extrudierens die vorher hergestellte Kautschukmischung zu einem Profil geformt, welches die im späteren Prozessverlauf benötigten Maße des Profils mit möglichst geringen Abweichungen aufweisen muss.

Während des Extrudierens im Extruder wird die Kautschukmischung verschiedenen mechanischen Kräften sowie hohen Temperaturen ausgesetzt. Je nach rheologischem Verhalten der im speziellen Fall verwendeten Kautschukmischung können die Auswirkungen dieser mechanischen Kräfte oder hohen Temperaturen auf die finale Formgebung der Kautschukmischung auf das resultierende Kautschukprofil einen großen Einfluss haben. Um die gewünschte finale Form des Kautschukprofils mit möglichst geringen Abweichungen für die jeweilige im speziellen Fall eingesetzte Kautschukmischung genau vorhersagen zu können, ist es vorteilhaft, das rheologische Verhalten der Kautschukmischung zu ermitteln. Dabei sollte das rheologische Verhalten der Kautschukmischung auf eine solche Weise bestimmt werden, dass bestimmte Prozessparameter auf Basis des rheologischen Verhaltens eingestellt werden können.

JP 2015020389 A offenbart ein Verfahren zum Evaluieren der Schrumpfcharakteristika. Das Verfahren umfasst (vgl. Anspruch 1)

- Extrudieren eines unvulkanisierten Kautschuks durch einen klein-skaligen Extruder, welcher eine kleinere Extrusionsdicke als ein groß-skaliger Kautschuk aufweist,

- Erhitzen der Kautschukextrusion auf eine spezifische Temperatur

- Messen nach einer spezifischen Zeit
  und

- Vorhersagen der Schrumpfcharakteristika der Kautschukextrusion beim Austreten aus einer groß-skaligen in der Produktion verwendeten Extrusionsmaschine.

Es war daher die Aufgabe, die der Erfindung zugrunde liegt, ein Verfahren bereitzustellen, das das rheologische Verhalten einer Kautschukmischung möglichst schnell und zuverlässig bestimmt und auch auf eine solche Weise bestimmt, sodass Vorhersagen über die einzusetzenden Prozessparameter gewonnen werden können. Im Rahmen der vorliegenden Erfindung sind solche Prozessparameter beispielsweise die Maße der Vorleiste, welche für den Herstellungsprozess verwendet werden sollen.

Offenbart ist ein Verfahren zur Ermittlung des Schrumpfverhaltens einer Kautschukmischung, wobei das Verfahren die folgenden Schritte umfasst:

a. Bereitstellen oder Herstellen einer Kautschukmischung mit einer Temperatur Tini im Temperaturbereich $T_1$,
b. Extrudieren der Kautschukmischung mit der Temperatur Tini mittels einer Extrusionsvorrichtung zu einem extrudierten Profil, wobei die Kautschukmischung in der Extrusionsvorrichtung zumindest teilweise eine Temperatur im Temperaturbereich $T_2$ aufweist,
c. Schneiden, bevorzugt Stanzen, des extrudierten Profils zu einem Profil mit einer Länge $L_1$,
d. Temperieren des geschnitten Profils mit einer Länge $L_1$ bei einer Umgebungstemperatur im Umgebungstemperaturbereich $T_3$ für einen vorbestimmten Zeitraum,
e. Messen des Betrages der Länge $L_2$ des temperierten Profils.

Der Erfindungsgegenstand ist in den Ansprüchen definiert.

Überaschenderweise wurde durch eigene Versuche herausgefunden, dass das Schrumpfverhalten in einem offenbarten Verfahren genügend Informationen über das rheologische Verhalten einer Kautschukmischung gibt, um entsprechende Extrusionsparameter für den einzusetzenden Extruder auf effiziente und präzise Weise zu bestimmen. Wie nachstehend erläutert kann durch die Messung der Längenveränderung eines temperierten Profils gemäß dem offenbarten Verfahren auf schnelle und zuverlässige Weise eine geeignete Vorleiste für den Extrusionsprozess in der Herstellung eines Reifens oder eines technischen Gummiprodukts gefunden werden. Dies war bisher nur durch große Anstrengung und mithilfe von Erfahrungswerten möglich, da für die richtige Auswahl der Vorleiste immer ein bestmöglicher Kompromiss zwischen einem möglichst hohem Durchsatz und einer möglichst kleinen Abweichung der Profillänge unter Produktionsbedingungen erzielt werden muss. Insbesondere für elastische Kautschukmischungen, welche einen hohen Schrumpf (messbar durch ein offenbartes Verfahren) aufweisen, müssen die Maße der Vorleiste und der Endleiste meist kleiner gewählt werden als für weniger elastische Mischungen, um den erhöhten Schrumpf auszugleichen. Dabei wird jedoch auch der Durchsatz beeinflusst, welcher sich im Allgemeinen bei kleiner werdenden Leistenöffnungen verringert. Die Länge $L_1$ der extrudierten Kautschukmischung, welche auch Länge des Kautschukstranges oder Profillänge genannt wird, wird bevorzugt in einer zur Extrusionsrichtung parallelen Richtung entlang der Kautschukmischung oder entlang des Kautschukstranges gemessen. Die Länge $L_2$ wird in der gleichen Erstreckungsrichtung der Kautschukmischung oder des Kautschukstranges gemessen wie die Länge $L_1$.

Bevorzugt ist ein Verfahren wie vorstehend beschrieben oder wie vorstehend als bevorzugt beschrieben, wobei das Verfahren zusätzlich den Schritt f) umfasst:

f. Ermitteln der Differenz $D_{PL}$ zwischen dem Betrag der Länge $L_1$ und dem Betrag der Länge $L_2$ und anschließendes Berechnen der prozentualen Profillängenveränderung $\Delta_{PL}$ aus der Differenz $D_{PL}$.

Bevorzugt ist ein Verfahren wie vorstehend beschrieben oder wie vorstehend als bevorzugt beschrieben, wobei das Verfahren den Schritt pre-a) umfasst:

pre-a) Erwärmen einer Kautschukmischung auf eine Temperatur im Temperaturbereich $T_1$.

Die Erfindung betrifft auch die folgenden besonderen Verfahren, welche spezifische Verfahren zur Ermittlung des Schrumpfverhaltens einer Kautschukmischung darstellen:

- ein Verfahren zur Ermittlung der Schrumpfung einer Kautschukmischung und
- ein Verfahren zur Ermittlung der Schrumpfung einer Kautschukmischung bei einer Umgebungstemperatur im nachstehend beschriebenen Bereich $T_3$ für einen vorbestimmten Zeitraum wie nachstehend beschrieben.

Die nachstehend beschriebenen vorteilhaften Aspekte eines offenbarten Verfahrens zur Ermittlung des Schrumpfverhaltens einer Kautschukmischung gelten auch für vorstehend beschriebene besondere Verfahren und die vorstehend beschriebenen offenbarten besonderen Verfahren gelten entsprechend für sämtliche Aspekte eines offenbarten Verfahrens zur Ermittlung des Schrumpfverhaltens einer Kautschukmischung.

Bevorzugt ist ein Verfahren wie vorstehend beschrieben oder wie vorstehend als bevorzugt beschrieben, wobei die Kautschukmischung eine Kautschukmischung für Reifen und technische Gummiartikel ist, bevorzugt eine Kautschukmischung für Reifen, besonders bevorzugt eine Kautschukmischung für Laufstreifen.

Im Rahmen der vorliegenden Erfindung ist unter dem Schrumpfverhalten einer Kautschukmischung bevorzugt der Schrumpf gemeint, welcher beim Temperieren der Kautschukmischung bei einer Umgebungstemperatur im Bereich von $T_3$ für einen vorbestimmten Zeitraum auftritt. Besonders bevorzugt liegt die Kautschukmischung in einem offenbarten Verfahren in Form eines Kautschukstranges vor, welcher eine zylindrische Form mit einem Durchmesser $D_1$ und einer Länge $L_1$ hat. Bevorzugt liegt hierbei die Länge $L_1$ des Profils im Bereich von 10 cm bis 200 cm und der Durchmesser $D_1$ im Bereich von 1 mm bis 100 mm.

Die Extrusionsvorrichtung gemäß dem vorstehend beschriebenen Verfahren muss dabei nicht derselben Extrusionsvorrichtung entsprechen, welche später beim Herstellungsprozess eingesetzt wird.

Die Extrusionsvorrichtung gemäß dem vorstehend beschriebenen Verfahren kann dabei z.B. auch eine Extrusionsvorrichtung sein, welche ausschließlich zur Bestimmung des rheologischen Verhaltens von Kautschukmischungen verwendet wird. Sie soll daher nur Informationen darüber liefern, wie die einzelnen Extrusionsparameter bei der später im Herstellungsprozess eingesetzten Extrusionsvorrichtung eingestellt werden müssen.

Eine Extrusionsvorrichtung gemäß einem offenbarten Verfahren wie vorstehend beschrieben, umfasst bevorzugt eine Profildüse, welche ganz bevorzugt durch ihre Öffnung die Erstreckung des extrudierten Profils bestimmt. Zur Definition der Erstreckung des Profils siehe weiter unten.

Besonders wichtig ist hierbei, dass die Extrusionsvorrichtung gemäß des vorstehend beschriebenen Verfahrens sowie die verschiedenen Parameter wie in einem vorstehend beschriebenen Verfahren angegeben stets konstant gehalten werden müssen, um die verschiedenen Kautschukmischungen bezüglich ihres rheologischen Verhaltens vergleichen und somit Rückschlüsse auf die Extrusionsparameter für den Herstellungsprozess gewinnen zu können.

Bevorzugt ist ein Verfahren wie vorstehend beschrieben oder wie vorstehend als bevorzugt beschrieben, wobei der Umgebungstemperaturbereich $T_3$ im Wesentlichen dem Temperaturbereich $T_2$ entspricht, wobei bevorzugt der Umgebungstemperaturbereich $T_3$ dem Temperaturbereich $T_2$ entspricht. Die Umgebungstemperatur im Umgebungstemperaturbereich $T_3$ überschreitet besonders bevorzugt nicht die Obergrenze des Temperaturbereichs $T_2$ im Schritt b. eines offenbarten Verfahrens.

Der Vorteil des vorstehend beschriebenen Aspekts der vorliegenden Erfindung ist, dass die Messmethode auf dieser Weise empfindlicher ist, da die Schrumpfung während des Schrittes d. größer und somit das offenbarte Messverfahren empfindlicher ist.

Bevorzugt ist ein Verfahren wie vorstehend beschrieben oder wie vorstehend als bevorzugt beschrieben, wobei

- der Temperaturbereich $T_1$ im Bereich von 10 °C bis 150 °C liegt, bevorzugt im Bereich von 20 °C bis 120°C, besonders bevorzugt im Bereich von 20 °C bis 100°C. Bevorzugt ist Tini dabei 80 °C.

Der Vorteil des vorstehend beschriebenen Aspekts der vorliegenden Erfindung ist, dass die Zähigkeit von Kautschukmischung mit zu tiefen Temperaturen so hoch ist, dass Extruder, insbesondere die Extruderschnecke und der Kautschukmischungsabstreifer zwischen Einzugswalze und Zylinder der Extrudervorrichtung beschädigt werden können. Bei zu hohen Temperaturen beginnt die Kautschukmischung hingegen zu vulkanisieren.

Bevorzugt ist ein Verfahren wie vorstehend beschrieben oder wie vorstehend als bevorzugt beschrieben, wobei

- der Temperaturbereich $T_2$ im Bereich von 40 °C bis 150 °C liegt, bevorzugt im Bereich von 70 °C bis 125°C, besonders bevorzugt im Bereich von 90 °C bis 120°C.

Der Vorteil des vorstehend beschriebenen Aspekts der vorliegenden Erfindung ist, dass durch einen möglichst niedrigen Temperaturbereich $T_2$ wie vorstehend beschrieben das offenbarte Verfahren noch präzisere und reproduzierbarere Messergebnisse liefert. $T_2$ ist so zu wählen, dass Für ein stabiles viskoelastisches Verhalten beim extrudieren muss $T_2$ die definierte untere Temperaturgrenze einhalten, darf aber gleichzeitig die obere Temperaturgrenze nicht übersteigen, da sonst die Vulkanisationsreaktion startet. Innerhalb des definierten Temperaturbereichs ist ein stabiler und somit wiederholbarer Testaufbau gewährleistet.

Der Ausdruck "zumindest teilweise" in Schritt b. eines offenbarten Verfahrens bedeutet bevorzugt, dass zumindest ein Teil der Kautschukmischung für einen Zeitanschnitt von mindestens 1 Sekunde, vorzugsweise mindestens 1 oder mindestens 10 Minuten, eine Temperatur im Temperaturbereich $T_2$ aufweist. Besonders bevorzugt weist

- ein Teil der Kautschukmischung während des Schrittes b. eine Temperatur im Temperaturbereich $T_2$
  oder
- die gesamte Kautschukmischung für einen Zeitanschnitt von mindestens 1 Sekunde, vorzugsweise mindestens 1 oder mindestens 10 Minuten, eine Temperatur im Temperaturbereich $T_2$
  auf.

Ganz besonders bevorzugt weist die gesamte Kautschukmischung während des Schrittes b. eine Temperatur im Temperaturbereich $T_2$ auf.

Die zumessende Temperatur des Teils der Kautschukmischung, welche gemäß Schritt b. des offenbarten Verfahrens im Temperaturbereich $T_2$ liegen muss, entspricht hierbei bevorzugt

a) der dem Fachmann bekannten Massetemperatur der Kautschukmischung an der Spitze der Extruderschnecke, bevorzugt an der Spitze der der finalen Extruderschnecke der Extrusionsvorrichtung,
oder
b) der dem Fachmann bekannten Massetemperatur in der Profildüse der Extrusionsvorrichtung.

Beide Massetemperaturen ergeben in der Regel ähnliche Temperaturen, wobei die Messung der Massetemperatur in der Profildüse der Extrusionsvorrichtung (Option b)) bevorzugt ist, da die Temperaturmessung hier geringeren Messungsschwankungen unterliegt. In anderen Fällen kann es jedoch auch sinnvoll sein, die Temperatur des Temperaturbereiches $T_2$ an der Spitze der Extruderschnecke der Extrusionsvorrichtung (Option a)) zu messen, zum Beispiel wenn eine Temperaturmessung in der Profildüse nicht möglich ist.

Da die Erwärmung im Extruder in der Regel nicht nur von einer Heiz- oder Kühlvorrichtung sondern primär auch durch den vom Schneckenmotor erzeugten Energieeintrag abhängt, d.h. von den Parametern verwendete Schneckendrehzahl, Viskosität der Kautschukmischung und der geometrischen Abmessungen der Extrudervorrichtung, insbesondere der Geometrie der Schenecke, abhängt, unterliegen sowohl Kautschukmischungen in der Profildüse der Extrusionsvorrichtung als auch Kautschukmischungen an der Spitze der Extruderschnecke aus verschiedenen Gründen Temperaturschwankungen in der jeweiligen Kautschukmischung, welche sich nur in einem untergeordnetem Maßstab auf die Messresultate auswirken. Es muss daher keine präzise Temperatur im Extruder eingehalten werden, da das Einhalten von Temperaturbereichen wie vorstehend für $T_2$ beschrieben für eine genügende Messgenauigkeit ausreicht.

Jedoch muss die genaue Temperatur Tini der Kautschukmischung bekannt sein, um die verschiedenen Kautschukmischungen mit einander vergleichen zu können. Für den Vergleich verschiedener Kautschukmischungen ist es auch vorteilhaft, wenn die vorstehend beschriebenen Temperaturbereiche für $T_2$ eingehalten werden.

Erfindungsgemäß liegt der Umgebungstemperaturbereich $T_3$ im Bereich von 60 °C bis 100°C.

Der Vorteil des vorstehend beschriebenen Aspekts der vorliegenden Erfindung ist, dass durch einen möglichst hohen Temperaturbereich $T_3$ wie vorstehend beschrieben, die Schrumpfung beschleunigt und auch erhöht wird und somit das Messverfahren noch präzisere und reproduzierbarere Ergebnisse ergibt. Jedoch ist mit steigender Temperatur $T_3$ auch mit steigender Wahrscheinlichkeit von Vulkanisationsreaktionen zu rechnen, welche den Schrumpfprozess zum Verlangsamen bis zum Erliegen bringen können. Dies würden präzisere und reproduzierbarere Ergebnisse zu wiederlaufen.

Zusätzlich können die Messergebnisse auch durch einen längeren Zeitraum gemäß Schritt d. des offenbarten Verfahrens verbessert werden. Hierbei sind verschiedene Kombinationen von Umgebungstemperatur und vorbestimmten Zeiträumen, vorzugsweise Zeiträumen wie nachstehend beschrieben, vorteilhaft, da Prozessdauer und Energiekosten optimieren werden sowie die Messgenauigkeit weiter erhöht werden kann.

Besonders bevorzugt ist ein Verfahren wie vorstehend beschrieben oder wie vorstehend als bevorzugt beschrieben, wobei

- der Temperaturbereich $T_2$ im Bereich von 40 °C bis 150 °C liegt, bevorzugt im Bereich von 70 °C bis 125°C, besonders bevorzugt im Bereich von 90 °C bis 120°C,
  und
- der Umgebungstemperaturbereich $T_3$ im Bereich von 60 °C bis 80°C.

Der Vorteil des vorstehend beschriebenen Aspekts der vorliegenden Erfindung ist, dass durch ein offenbartes besonders bevorzugtes Verfahren wie vorstehend beschrieben das offenbarte Verfahren aufgrund der vorstehend beschriebenen Vorteile noch präzisere und reproduzierbarere Messergebnisse liefert.

Bevorzugt ist ein Verfahren wie vorstehend beschrieben oder wie vorstehend als bevorzugt beschrieben, wobei die Länge $L_1$ im Bereich von 200 cm bis 1 cm liegt, bevorzugt im Bereich von 100 cm bis 10 cm, besonders bevorzugt im Bereich von 50 cm bis 30 cm. Der Vorteil des vorstehend beschriebenen Aspekts der vorliegenden Erfindung ist, dass das offenbarte Verfahren noch genauere und damit reproduzierbarere Ergebnisse liefert, je länger die Länge $L_1$ ist.

Bevorzugt ist ein Verfahren wie vorstehend beschrieben oder wie vorstehend als bevorzugt beschrieben, wobei das geschnittene Profil während Schritt d) auf einem Anti-Haft-Material abgelegt ist, bevorzugt auf Antihaft-Papier oder einem Material ausgewählt aus der Gruppe bestehend aus: Backpapier, Teflon, Sandbad und PE-Folie (Polyethylen-Folie). Eine geeignete PE-Folie ist beispielsweise das Produkt "Flachfolie (LDPE 20 μm) einseitig perforiert in Diamantenstruktur" der Firma "In/folie Verpackungs GmbH".

Ein geeignetes Antihaft-Papier ist beispielsweise das Handelsprodukt "CY-tf101" der Firma Shenghua.

Besonders bevorzugt sind Anti-Haft-Materialien bevorzugt Materialien, wobei die maximale Trennkraft zwischen einem vorstehend beschriebenen Kautschukprofil, bevorzugt mit der Länge $L_1$, und einem Anti-Haft-Material geringer ist als 0,3 N, bevorzugt geringer als 0,1 N, besonders bevorzugt geringer als 0,01 N. Gemessen wird die maximale Trennkraft bei 23 °C gemäß der FINAT Test Methode FTM 9 (Loop tack Messung, vgl. FINAT Test Method 9, FINAT Technisches Handbuch, 6. Ausgabe 2001). Die Einstellungen für die Zugprüfmaschine und die Messmethode sind dabei wie folgt gewählt: Geschwindigkeit 300 mm/min, Kontaktkraft: 30 N, Kontaktzeit: 10 Sekunde, Kontaktfläche 20 mm x 12,5 mm.

Besonders bevorzugt sind auch Anti-Haft-Materialien bevorzugt Materialien, wobei die Adhäsion zwischen einem vorstehend beschriebenen Kautschukprofil, bevorzugt mit der Länge $L_1$, und einem Anti-Haft-Material geringer ist als 20 N, bevorzugt geringer als 5 N, besonders bevorzugt geringer als 0,3 N. Gemessen wird die Adhäsion bei 23 °C gemäß ASTM D413 - 98 (2002). Die Einstellungen für die Messmethode sind dabei wie folgt gewählt: Methodenart "Ring Specimens", Geschwindigkeit 300 mm/min, Kontaktfläche des Kautschukprofils zum Anti-Haft-Material 110 mm x 25 mm.

Ganz besonders bevorzugt ist jedoch ein Verfahren wie vorstehend als bevorzugt beschrieben, wobei das Anti-Haft-Material ein Material ist, wobei die Klebekraft (entspricht dem englischen Wort "Tack") zwischen einem vorstehend beschriebenen Profil, bevorzugt mit der Länge $L_1$, und dem Anti-Haft-Material geringer ist als 5 psi, bevorzugt geringer als 10 psi, besonders bevorzugt geringer als 20 psi. Gemessen wird die Klebekraft bei 23 °C gemäß der Methode nach Beatty (J. R. Beatty, Rubber Chemistry and Technology Sep 1969, Vol. 42, No. 4 (September 1969) pp. 1040-1053). Die Einstellungen des Tel-Tak-Messinstruments und die Messmethode sind dabei wie folgt gewählt: Geschwindigkeit 25 mm/min, Kontaktdruck ("contact load"): 16 psi, Kontaktzeit: 60 Sekunde, Kontaktfläche 50 mm x 6,25 mm.

Der Vorteil des vorstehend beschriebenen Aspekts der vorliegenden Erfindung ist, dass durch die möglichst geringe Haftung das Kautschukprofil möglichst ohne eine verfälschende Einwirkung weiterer Kräfte im Ofen schrumpfen kann.

Bevorzugt ist ein Verfahren wie vorstehend beschrieben oder wie vorstehend als bevorzugt beschrieben, wobei der vorbestimmte Zeitraum in Schritt d. mindestens 10 Minuten beträgt, bevorzugt im Bereich von 10 bis 1200 Minuten, besonders bevorzugt im Bereich von 30 bis 600 Minuten liegt. Schritt d. wird dabei bevorzugt in einer Heizvorrichtung, bevorzugt in einem Ofen, durchgeführt. Der Schritt d. beginnt somit, sobald das geschnittene Profil mit einer Länge $L_1$ in der Heizvorrichtung ist, und endet, sobald es die Heizvorrichtung verlässt.

Bevorzugt ist ein offenbartes Verfahren, wobei der vorbestimmte Zeitraum in Schritt d. mindestens 10 Minuten beträgt und der Umgebungstemperaturbereich $T_3$ im Bereich von 60 °C bis 100°C liegt.

Diese verschiedenen Kombinationen von Umgebungstemperatur und vorbestimmten Zeiträumen sind vorteilhaft, da Prozessdauer und Energiekosten optimieren werden.

Der Vorteil des vorstehend beschriebenen Aspekts der vorliegenden Erfindung ist, dass bei der vorstehend angegebenen Mindestlänge noch genauere Messgenauigkeit erreicht wird. Bei Zeiträumen über 600 Minuten erhöht sich die Wahrscheinlichkeit von Nebenreaktionen derart, dass die Messergebnisse größeren Messschwankungen ausgesetzt sind. Außerdem sind längere Zeiträume aus prozesstechnischer Sicht unvorteilhaft.

Bevorzugt ist ein Verfahren wie vorstehend beschrieben oder wie vorstehend als bevorzugt beschrieben, wobei das Verfahren einen weiteren Schritt umfasst:

end) Ermitteln der Art der Produktionsdüse für die später in der Produktion eingesetzten Extrusionsvorrichtung aus der prozentualen Profillängenveränderung $\Delta_{PL}$.

Der Vorteil der vorliegenden Erfindung ist, dass die prozentuale Profillängenveränderung $\Delta_{PL}$ ohne weiteren großen experimentellen Aufwand direkten Aufschluss über die richtige Produktionsdüse der später in der Produktion eingesetzten Extrusionsvorrichtung gibt. Die zu ermittelnde Produktionsdüse für die später in der Produktion eingesetzten Extrusionsvorrichtung ist dabei mit geringem Aufwand durch den Fachmann aus der jeweiligen Profillängenänderung ableitbar.

Bevorzugt ist ein Verfahren wie vorstehend beschrieben oder wie vorstehend als bevorzugt beschrieben, wobei der Zeitraum für Schritt c. höchstens 10 Minuten beträgt, bevorzugt im Bereich von 0,1 bis 5 Minuten liegt. Der Schritt c. endet genau in dem Moment, in dem das Profil durch das Schneidewerkzeug ausgeschnitten oder durch das Stanzwerkzeug ausgestanzt ist. Der Schritt d. beginnt wie vorstehend beschrieben.

Der Vorteil des vorstehend beschriebenen Aspekts der vorliegenden Erfindung ist, dass keine geringfügigen Veränderungen der Kautschukmischung auftreten können, welche die Ungenauigkeit der Messergebnisse erhöht.

Bevorzugt ist ein Verfahren wie vorstehend beschrieben oder wie vorstehend als bevorzugt beschrieben, wobei das Profil in Schritt b. durch eine Profildüse der Extrusionsvorrichtung extrudiert wird, welche eine Öffnung mit einem Erstreckung im Bereich von 1 mm bis 100 mm aufweist.

Im Rahmen der vorliegenden Erfindung ist die Erstreckung der Öffnung der Profildüse der Extrusionsvorrichtung in Schritt b. der maximale Durchmesser, falls die Öffnung ein Kreis oder eine Ellipse ist, oder die maximale Diagonale zwischen zwei gegenüberliegenden Ecken, falls die Öffnung ein Polygon mit mehr als drei Ecken ist. Ist die Öffnung ein Dreieck, so handelt es sich bei der Erstreckung um die maximale Höhe des Dreiecks. Im Rahmen des vorstehenden bezieht sich der Ausdruck "maximal" auf die Erstreckung der Diagonale, des Kreises oder der Ellipse, welche am längsten ist. Bei funktionsgemäßer Durchführung des offenbarten Verfahrens entspricht der Querschnitt der Kautschukmischung bzw. des Kautschukstranges der Form der vorstehend beschriebenen Öffnung.

Der Vorteil des vorstehend beschriebenen Aspekts der vorliegenden Erfindung ist, dass bei dickeren Profilen als vorstehend beschrieben die Schrumpfung senkrecht zur Erstreckung der Länge $L_1$ des Profils die Messergebnisse unvorteilhaft beeinflussen kann. Bei dünneren Profilen als vorstehend beschrieben können die Profile dagegen nicht formstabil genug sein und somit nachteilig die Messung beeinflussen.

Bevorzugt ist ein Verfahren wie vorstehend beschrieben oder wie vorstehend als bevorzugt beschrieben, wobei das Verfahren einen Schritt b2) umfasst:

b2) Befördern des extrudierte Profils auf einem Fördermittel mit einer Fördergeschwindigkeit, wobei in Schritt b) die Austrittsgeschwindigkeit des extrudierten Profils etwa der Fördergeschwindigkeit des Fördermittels entspricht. Das Fördermittel ist bevorzugt ein Förderband.

Der Ausdruck "etwa" bedeutet in dem vorstehend beschriebenen Aspekt der Erfindung, dass die Differenz der Fördergeschwindigkeit und der Austrittsgeschwindigkeit kleiner als 0,5 m/min, bevorzugt Austrittsgeschwindigkeit kleiner als 0,2 m/min, besonders bevorzugt Austrittsgeschwindigkeit kleiner als 0,1 m/min. Typische Austrittsgeschwindigkeiten des extrudierten Profils wie vorstehend beschrieben, d.h. die Austrittsgeschwindigkeit des extrudierten Profils aus der Profildüse der Extrusionsvorrichtung gemäß Schritt b. des offenbarten Verfahrens, liegen im Bereich von 1 m/min bis 20 m/min, bevorzugt im Bereich von 1 m/min bis 5 m/min. Das extrudierte Profil tritt dabei bevorzugt aus einer Profildüse der wie vorstehend beschrieben Extrusionsvorrichtung gemäß Schritt b. aus.

Der Vorteil des vorstehend beschriebenen Aspekts der vorliegenden Erfindung ist, dass die Länge des Profils beim Transfer auf das Fördermittel nicht verändert wird und die Ergebnisse der Messmethode somit noch reproduzierbarer werden.

Bevorzugt ist ein Verfahren wie vorstehend beschrieben oder wie vorstehend als bevorzugt beschrieben, wobei die Extrusionsvorrichtung in Schritt b. ein Einschneckenextruder, ein Doppelschneckenextruder, eine Zahnradpumpe oder eine Strangpresse ist.

Bevorzugt ist auch ein Verfahren wie vorstehend beschrieben oder wie vorstehend als bevorzugt beschrieben, wobei die in Schritt a. bereitgestellte oder hergestellte Kautschukmischung mindestens eine Verbindung umfasst ausgewählt aus der Gruppe bestehend aus Silica, Ruß, Silane und Weichmacher. Besonders bevorzugt umfasst die Kautschukmischung mindestens 50 phr Silica und mindestens 5 phr Weichmacher, ganz besonders bevorzugt mindestens 10 phr Weichmacher und 80 phr Silica. Hierbei sind Silane bevorzugt Silan-Kupplungsreagenzien in Form von bifunktionelle Organosilanen, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Besonders bevorzugt sind Silane im Rahmen der Erfindung ausgesucht aus der Gruppe bestehend aus

3-Mercaptopropyltriethoxysilan,
3-Thiocyanato-propyltrimethoxysilan
und
3,3'-Bis(triethoxysilylpropyl)polysulfide mit 2 bis 8 Schwefelatomen.

Ganz besonders bevorzugt sind 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden.

Zu den im Rahmen der vorliegenden Erfindung umfasst eine offenbarte Kautschukmischung zumindest einen bevorzugten Weichmacher ausgewählt aus der Gruppe bestehend aus aromatische, naphthenische und paraffinische Mineralölweichmacher. Besonders bevorzugte Mineralölweichmacher sind dabei ausgewählt aus der Gruppe bestehend aus MES (mild extraction solvate), RAE (Residual Aromatic Extract), TDAE (treated distillate aromatic extract), Rubber-to-Liquid-Öle (RTL) und Biomass-to-Liquid-Öle (BTL), Rapsöl, Silane, Faktisse und Flüssig-Polymere, wobei die Flüssig-Polymere ein mittleres Molekulargewicht (Bestimmung per GPC = gel permeation chromatography, in Anlehnung an BS ISO 11344:2004) zwischen 500 und 20000 g/mol aufweisen.

Der Vorteil des vorstehend beschriebenen Aspekts der vorliegenden Erfindung ist, dass solche Mischungen einen besonders starken Schrumpf beim Extrudieren aufweisen und somit eine geeignete Vorleiste für den Herstellungsprozess bisher nur schwer ermittelt werden konnte. Mit einem offenbarten Verfahren kann die Ermittlung der Vorleiste für den Herstellungsprozess auf schnelle und zuverlässige Weise erfolgen.

In besonderem Maße bevorzugt ist ein Verfahren wie vorstehend beschrieben, wobei

- der Temperaturbereich $T_1$ im Bereich von 20 °C bis 100 °C liegt
- der Temperaturbereich $T_2$ im Bereich von 90 °C bis 120 °C liegt
- der Umgebungstemperaturbereich $T_3$ im Bereich von 60 °C bis 100 °C liegt,
- die Länge $L_1$ im Bereich 50 cm bis 30 cm,
- das geschnittene Profil während Schritt d) auf einem Anti-Haft-Material abgelegt ist,
- der vorbestimmte Zeitraum in Schritt d. mindestens 10 Minuten beträgt,
- das Verfahren einen weiteren Schritt umfasst:
  end) Ermitteln der Art der Profildüse aus der prozentualen Profillängenveränderung $\Delta_{PL}$,
- der Zeitraum für Schritt c. höchstens 10 Minuten beträgt,
- das Profil in Schritt b. durch eine Profildüse extrudiert wird, welche eine Öffnung mit einem Erstreckung im Bereich von 1 mm bis 100 mm aufweist.,
- das Verfahren einen Schritt b2) umfasst:
  b2) Befördern des extrudierte Profils auf einem Fördermittel mit einer Fördergeschwindigkeit, wobei in Schritt b) die Austrittsgeschwindigkeit des extrudierten Profils etwa der Fördergeschwindigkeit des Fördermittels entspricht, und
- die Extrusionsvorrichtung in Schritt b) ein Einschneckenextruder ist.

Die Erfindung soll nun anhand der nachstehenden Beispiele näher erläutert werden.

**Beispiele:**

In den nun folgenden Beispielen soll veranschaulicht werden, wie die Messung des Schrumpfs gemäß einem offenbarten Verfahren helfen könnte, die die Vorleiste in einem Extruder vorherzusagen, unter der Voraussetzung, dass das für die Produktion gewünschte Kautschukprofil bekannt ist.

Das nun folgende Beispiel bezieht sich auf die Herstellung eines Kautschukprofils für Reifen mit drei Komponenten, wobei sich die drei Komponenten aus zwei Wing-Komponenten und einer Base-Komponente zusammensetzen.

**Messmethoden:**

1. Bestimmung der prozentualen Profillängenveränderung $\Delta_{PL}$:

$$\Delta_{PL} = 100 \cdot D_P/L_1 = 100 \cdot (L_1 - L_2)/L_1 \qquad \text{(Formel I)}$$

wobei

L$_1$ die geschnittenen Länge gemäß Schritt c. des offenbarten Verfahrens und

L$_2$ die in Schritt e. des offenbarten Verfahrens gemessenes Länge L$_2$ ist.

2. Bestimmung des Predie-Faktors aus der jeweiligen prozentualen Profillängenveränderung $\Delta_{PL}$ (bis maximal 20 %) gemäß Tabelle A:

Tabelle A: Korrelierende Werte zur Bestimmung des Predie-Faktors, welche im Rahmen einer kleinen Anzahl von einfachen Vorversuchen ermittelt wurden.

| Prozentualen Profillängenveränderung $\Delta_{PL}$ | Predie-Faktor F$_{Predie}$ |
|---|---|
| Bis 1 % | 0,99 |
| Bis 2 % | 0,98 |
| Bis 3 % | 0,97 |
| Bis 4 % | 0,96 |
| Bis 5 % | 0,95 |
| Bis 6 % | 0,94 |
| Bis 7 % | 0,93 |
| Bis 8 % | 0,92 |
| Bis 9 % | 0,91 |
| Bis 10 % | 0,90 |
| Bis 12 % | 0,89 |
| Bis 14 % | 0,88 |
| Bis 16 % | 0,87 |
| Bis 18 % | 0,86 |
| Bis 20 % | 0,85 |

3. Ermittlung der maximalen Breite der zu verwendenden Vorleiste (d.h. "Pre-Die"):

$$B_{Predie} = F_{Predie} \cdot B_{extrudiertes\ Profil} \qquad \text{(Formel II)}$$

wobei

- F$_{Predie}$ der nach Tabelle A ermittelte Predie-Faktor ist,
- B$_{extrudiertes\ Profil}$ die maximale Breite der Basiskomponente des im Herstellungsprozess gewünschten Kautschukprofils (bevorzugt gemessen an der Unterseite der Basiskomponente des Kautschukprofils) und
- B$_{Predie}$ die maximale Breite der Austrittsöffnung der Basiskomponente der Vorleiste (bevorzugt gemessen an der Unterseite der Austrittsöffnung der Basiskomponente der Vorleiste)

ist.

Jede Vorleiste für eine 3-Komponenten-Vorleiste hat eine Austrittsöffnung für die Base-Komponente. Die Breite der Austrittsöffnung der Base-Komponente ist dabei für jede Vorleiste spezifisch. Sobald der Fachmann also die Breite der Austrittsöffnung der Base-Komponente für die Vorleiste kennt, weiß er, welche spezifische Vorleiste im Herstellungsprozess eingesetzt werden muss.

**Herstellung:**

**Herstellung der Kautschukstränge:**

Die Herstellung der Kautschukmischung für die Kautschukstränge erfolgt nach dem in der Kautschukindustrie üblichen Verfahren, bei dem zunächst in einer ersten Mischstufe eine Grundmischung mit allen Bestandteilen außer dem Vulkanisationssystem (vgl. Tabelle 1) hergestellt wird. Durch Zugabe des Vulkanisationssystems (Schwefel und Vulkanisationsmittel) in einer letzten Mischstufe wird die Fertigmischung erzeugt. Die Fertigmischung wird durch einen Einschneckenextruder mit einem Schneckenextruder von 19 mm weiterverarbeitet und in die entsprechende Form eines Stranges extrudiert. Der Einschneckenextruder wies die folgenden Parameter auf:

Einschneckenextruder: 19 / 10D, 1-gängig;
Kompressionsverhältnis: 1:1;
Öffnung der Profildüse: rund, Durchmesser = 4 mm;
Massetemperatur der Kautschukmischung in der Profildüse: 105 °C;
Schneckendrehzahl: 12 min$^{-1}$.

Im Anschluss wurde der extrudierte Kautschukstrang, der einen Durchmesser von größer 4 mm, abhängig von der Mischungsquellung, hat auf eine Länge 400 mm ausgeschnitten. Der ausgeschnittene Strang wurde in einem Ofen mit einer Ofentemperatur von 80 °C, welche die Umgebungstemperatur des ausgeschnittenen Kautschukstranges war, für 120 min temperiert.
Im Anschluss wurde die Länge des temperierten Kautschukstrangs ermittelt.

**Kautschukmischungszusammensetzung:**

Tabelle 1: Zusammensetzungen der Kautschukmischungen, welche zur Ermittlung der Ergebnisse gemäß Tabelle 2 verwendet wurden

| Bestandteil | Einheit | Mischstufe | Mischung 1 | Mischung 2 | Mischung 3 |
|---|---|---|---|---|---|
| NR | phr | 1 | 10 | 10 | 10 |
| BR | phr | 1 | 30 | 30 | 30 |
| SBR | phr | 1 | 60 | 60 | 60 |
| Ruß | phr | 1 | 0 | 0 | 90 |
| Silica | phr | 1 | 90 | 90 | 0 |
| Silane | phr | 1 | 10 | 10 | 0 |
| Weichmacher | phr | 1 | 20 | 40 | 40 |
| Alterungsschutzmittel | phr | 1 | 8 | 8 | 8 |
| Zinkoxid | phr | 1 | 2 | 2 | 2 |
| Stearinsäure | phr | 1 | 1 | 1 | 1 |
| Schwefel | phr | 2 | 1 | 1 | 1 |
| Vulkanisationsmittel | phr | 2 | 4 | 4 | 4 |

**Experimentelle Ergebnisse:**

Tabelle 2: Experimentelle Daten der offenbart und nicht offenbart gestanzten Profile:

| Mischungsspezifikationen | | | Angaben zum Produktionsprozess | | |
|---|---|---|---|---|---|
| Verwendete Kautschukmischung gemäß Tabelle 1 | Erfindungsgemäß gemessene Profillängenveränderung | korrelierender Predie-Faktor (Tabelle A) | maximale Breite $B_{Predie}$ der Base-komponente des Kautschukprofils gemäß Formel II | Prozentualer Schrumpf unter Produktionsbedingungen | Produktivitätsindex* |
| Mischung 1 | 14% | 0,88 | 185 mm | 0,6 % | 100 % |
| Mischung 2 | 7% | 0,93 | 195 mm | 0,5 % | 120 % |
| Mischung 3 | 2% | 0,98 | 205 mm | 0,4 % | 140 % |
| Tabelle 2: * Mischung 1 als Basis auf 100% gesetzt, Breite der Base-Komponente des extrudierten und finalen Kautschukprofils ($B_{extrudiertes\ Profil}$ gemäß Formel II): 210 mm | | | | | |

Wie man Tabelle 2 entnehmen kann, konnte mithilfe der ermittelten Predie-Faktoren die maximale Breite der Austrittsöffnung der Base-Komponente der Vorleiste für eine Endleiste mit einer maximalen Breite der Base-Komponente auf schnelle Weise bestimmt werden. Dabei wurden der prozentualer Schrumpf unter Produktionsbedingungen auf höchstens 0,6 % begrenzt, welches die Obergrenze der geforderten Toleranz unter Produktionsbedingungen darstellt. Zudem konnte bei den Mischungen 2 und 3 zusätzlich die Produktion um 20 % bzw. 40 % gegenüber dem Produktionsprozess für die Mischung 1 erhöht werden (siehe letzte Spalte "Produktivitätsindex").

In sämtlichen Fällen konnten somit effiziente Produktionsbedingungen auf schnelle Weise gefunden werden.

**Patentansprüche**

1. Verfahren zur Ermittlung des Schrumpfverhaltens einer Kautschukmischung, wobei das Verfahren die folgenden Schritte umfasst:

   a. Bereitstellen oder Herstellen einer Kautschukmischung mit einer Temperatur $T_{ini}$ im Temperaturbereich $T_1$,
   b. Extrudieren der Kautschukmischung mit der Temperatur $T_{ini}$ mittels einer Extrusionsvorrichtung zu einem extrudierten Profil, wobei die Kautschukmischung in der Extrusionsvorrichtung zumindest teilweise eine Temperatur im Temperaturbereich $T_2$ aufweist,
   c. Schneiden des extrudierten Profils zu einem Profil mit einer Länge $L_1$,
   d. Temperieren des geschnitten Profils mit einer Länge $L_1$ bei einer Umgebungstemperatur im Umgebungstemperaturbereich $T_3$ für einen vorbestimmten Zeitraum,
   e. Messen des Betrages der Länge $L_2$ des temperierten Profils,

   wobei der Umgebungstemperaturbereich $T_3$ im Bereich von 60 °C bis 100 °C liegt.

2. Verfahren nach Anspruch 1, wobei der Umgebungstemperaturbereich $T_3$ dem Temperaturbereich $T_2$ entspricht.

3. Verfahren nach einem der vorangehenden Ansprüche, wobei

   - die Temperatur $T_{ini}$ 80 °C ist,
   und/oder
   - der Temperaturbereich $T_1$ im Bereich von 10 °C bis 150 °C liegt,
   und/oder
   - der Temperaturbereich $T_2$ im Bereich von 40 °C bis 150 °C liegt.

4. Verfahren nach einem der vorangehenden Ansprüche, wobei die Länge $L_1$ im Bereich von 50 cm bis 30 cm.

5. Verfahren nach einem der vorangehenden Ansprüche, wobei das Profil in Schritt b. durch eine Profildüse der Extrusionsvorrichtung extrudiert wird, welche eine Öffnung mit einem Erstreckung im Bereich von 1 mm bis 100 mm aufweist.

6. Verfahren nach einem der vorangehenden Ansprüche, wobei das geschnittene Profil während Schritt d) auf einem Anti-Haft-Material abgelegt ist, wobei die maximale Trennkraft zwischen dem in Anspruch 1 oder Anspruch 4 oder Anspruch 5 definierten Profil mit der Länge $L_1$ und dem Anti-Haft-Material geringer als 5 N ist, gemessen bei 23 °C gemäß der FINAT Test Methode FTM 9.

7. Verfahren nach einem der vorangehenden Ansprüche, wobei der vorbestimmte Zeitraum in Schritt d. im Bereich von 30 bis 600 Minuten liegt.

8. Verfahren nach einem der vorangehenden Ansprüche, wobei der Zeitraum für Schritt c. im Bereich von 0,1 bis 5 Minuten liegt.

9. Verfahren nach einem der vorangehenden Ansprüche, wobei das Verfahren einen Schritt b2) umfasst:
   b2) Befördern des extrudierte Profils auf einem Fördermittel mit einer Fördergeschwindigkeit, wobei in Schritt b) die Austrittsgeschwindigkeit des extrudierten Profils etwa der Fördergeschwindigkeit des Fördermittels entspricht.

10. Verfahren nach einem der vorangehenden Ansprüche, wobei die Extrusionsvorrichtung in Schritt b. ein Einschneckenextruder, ein Doppelschneckenextruder, eine Zahnradpumpe oder eine Strangpresse ist.

**Claims**

1. Method for determining the shrinkage behaviour of a rubber mixture, wherein the method comprises the following steps of:

   a. providing or producing a rubber mixture at a temperature Tini in the temperature range $T_1$,
   b. extruding the rubber mixture at the temperature Tini by means of an extrusion apparatus to form an extruded profile, wherein the rubber mixture at least partially exhibits a temperature in the temperature range $T_2$ in the extrusion apparatus,
   c. cutting the extruded profile to form a profile with a length $L_1$,
   d. tempering the cut profile with a length $L_1$ at an ambient temperature in the ambient temperature range $T_3$ for a predetermined period of time,
   e. measuring the value of the length $L_2$ of the tempered profile,

   wherein the ambient temperature range $T_3$ is in the range from 60°C to 100°C.

2. Method according to Claim 1, wherein the ambient temperature range $T_3$ corresponds to the temperature range $T_2$.

3. Method according to either of the preceding claims, wherein

   - the temperature Tini is 80°C,
   and/or
   - the temperature range $T_1$ is in the range from 10°C to 150°C,
   and/or
   - the temperature range $T_2$ is in the range from 40°C to 150°C.

4. Method according to one of the preceding claims, wherein the length $L_1$ is in the range from 50 cm to 30 cm.

5. Method according to one of the preceding claims, wherein, in step b., the profile is extruded through a profile die of the extrusion apparatus, which has an opening with an extension in the range from 1 mm to 100 mm.

6. Method according to one of the preceding claims, wherein, during step d., the cut profile is deposited on a non-stick material, wherein the maximum separating force between the profile, defined in Claim 1 or Claim 4 or Claim 5, with the length $L_1$ and the non-stick material is less than 5 N, measured at 23°C according to the FINAT test method FTM 9.

7. Method according to one of the preceding claims, wherein the predetermined period of time in step d. is in the range from 30 to 600 minutes.

8. Method according to one of the preceding claims, wherein the period of time for step c. is in the range from 0.1 to 5 minutes.

9. Method according to one of the preceding claims, wherein the method comprises a step b2):
   b2) conveying the extruded profile on a conveying means at a conveying speed, wherein, in step b., the exit speed of the extruded profile corresponds approximately to the conveying speed of the conveying means.

10. Method according to one of the preceding claims, wherein the extrusion apparatus in step b. is a single-screw extruder, a twin-screw extruder, a gear pump or an extrusion press.

**Revendications**

1. Procédé de détermination de la rétractilité d'un mélange de caoutchouc, dans lequel le procédé comprend les étapes suivantes:

   a. préparer ou produire un mélange de caoutchouc avec une température Tini dans la plage de température $T_1$,
   b. extruder le mélange de caoutchouc avec la température Tini au moyen d'un dispositif d'extrusion en un profilé extrudé, dans lequel le mélange de caoutchouc présente dans le dispositif d'extrusion au moins partiellement une température dans la plage de température $T_2$,

c. couper le profilé extrudé en un profilé d'une longueur $L_1$,

d. égaliser la température du profilé coupé de longueur $L_1$ à une température ambiante dans la plage de température ambiante $T_3$ pendant un laps de temps prédéterminé,

e. mesurer la valeur de la longueur $L_2$ du profilé égalisé en température,

dans lequel la plage de température ambiante $T_3$ se situe dans la plage de 60°C à 100°C.

2. Procédé selon la revendication 1, dans lequel la plage de température ambiante $T_3$ correspond à la plage de température $T_2$.

3. Procédé selon l'une quelconque des revendications précédentes, dans lequel

- la température Tini est 80°C,
et/ou
- la plage de température $T_1$ se situe dans la plage de 10°C à 150°C,
et/ou
- la plage de température $T_2$ se situe dans la plage de 40°C à 150°C.

4. Procédé selon l'une quelconque des revendications précédentes, dans lequel la longueur $L_1$ se situe dans la plage de 50 cm à 30 cm.

5. Procédé selon l'une quelconque des revendications précédentes, dans lequel on extrude le profilé à l'étape b. à travers une filière profilée du dispositif d'extrusion, qui présente une ouverture ayant une extension dans la plage de 1 mm à 100 mm.

6. Procédé selon l'une quelconque des revendications précédentes, dans lequel le profilé coupé est déposé pendant l'étape d. sur un matériau anti-adhérence, dans lequel la force de séparation entre le profilé de longueur $L_1$ défini dans la revendication 1 ou la revendication 4 ou la revendication 5 et le matériau anti-adhérence est inférieure à 5 N, mesurée à 23°C selon la méthode de test FINAT FTM 9.

7. Procédé selon l'une quelconque des revendications précédentes, dans lequel le laps de temps prédéterminé dans l'étape d. se situe dans la plage de 30 à 600 minutes.

8. Procédé selon l'une quelconque des revendications précédentes, dans lequel le laps de temps prédéterminé pour l'étape c. se situe dans la plage de 0,1 à 5 minutes.

9. Procédé selon l'une quelconque des revendications précédentes, dans lequel le procédé comprend une étape b2):
b2. transporter le profilé extrudé sur un moyen de transport avec une vitesse de transport, dans lequel dans l'étape b. la vitesse de sortie du profilé extrudé correspond sensiblement à la vitesse de transport du moyen de transport.

10. Procédé selon l'une quelconque des revendications précédentes, dans lequel le dispositif d'extrusion à l'étape b. est une extrudeuse à vis unique, une extrudeuse à vis double, une pompe à engrenage ou une presse d'extrusion.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2015020389 A

**In der Beschreibung aufgeführte Nicht-Patentliteratur**

- **J. R. BEATTY.** *Rubber Chemistry and Technology Sep 1969,* September 1969, vol. 42 (4), 1040-1053